Europäisches Patentamt

(19) European Patent Office

Office européen des brevets

(11) Publication number: **0 149 892**
**B1**

(12) **EUROPEAN PATENT SPECIFICATION**

(45) Date of publication of patent specification: **07.03.90**

(51) Int. Cl.⁵: **F 16 H 37/08, F 16 H 37/12 // F16H3/66**

(21) Application number: **84308160.5**

(22) Date of filing: **26.11.84**

(54) **Continuously variable transmission system.**

(30) Priority: **02.12.83 GB 8332237**

(43) Date of publication of application:
**31.07.85 Bulletin 85/31**

(45) Publication of the grant of the patent:
**07.03.90 Bulletin 90/10**

(84) Designated Contracting States:
**BE DE FR GB IT NL SE**

(56) References cited:
**EP-A-0 084 724**
**WO-A-82/00271**
**DE-A-2 347 721**
**FR-A-1 021 198**
**FR-A-2 386 740**
**GB-A-1 078 791**
**GB-A-2 100 372**
**US-A-1 056 292**
**US-A-2 164 504**
**US-A-3 545 302**
**US-A-4 281 564**

(73) Proprietor: **TOROTRAK (DEVELOPMENT) LIMITED**
**101 Newington Causeway**
**London SE1 6BU (GB)**

(72) Inventor: **Greenwood, Christopher J.**
**14 Edinburgh Close**
**Leyland Lancs (GB)**

(74) Representative: **Stables, Patrick Antony**
**Torotrak (Development) Limited 101 Newington Causeway**
**GB-London SE1 6BU (GB)**

Courier Press, Leamington Spa, England.

## Description

This invention relates to a continuously variable ratio transmission system suitable for use in motor vehicles, for example. In particular, it is concerned with transmission of the two regime type, that is transmissions operable in either Low Regime with power recirculation or High Regime without it, as defined in the first part of claim 1 and as known from FR—A—23 86 740. A further continuously variable ratio transmission of the toroidal race-rolling traction type is described in GB—A—2108600. Two regime continuously variable ratio transmission systems are also now known, and one using a toroidal race-rolling traction transmission unit is disclosed in GB—A—2100372 having another connection between the variator and the two epicyclic gear trains. It is an object of the present invention to provide a two regime system which is coaxial throughout, conveniently compact and simple in construction.

The invention consists in a two regime, continuously variable ratio transmission system having coaxial input and output shafts as defined in claim 1 and comprising: a continuously variable ratio transmission unit (a variator) connected coaxially to the input shaft and having a coaxial output shaft; a mixing epicyclic gear train having a first input gear connected directly to the system input shaft, a second input gear, and an output element connected directly to the system output shaft; a Low Regime epicyclic gear train disposed between the variator and the mixing epicyclic gear train and having an input gear coupled to the variator output shaft, a braked element cooperating with a Low Regime brake, and an output gear connected to said second input gear, whereby drive may be transmitted in Low Regime from the variator output shaft to the mixing epicyclic gear train in a non-unity ratio; and High Regime clutch means, wherein change between high and low regime or vice versa is synchronous, characterised in that the said clutch means is arranged so as to connect the variator output shaft directly to the system output shaft when engaged. In this specification and claims the statement two rotary parts are "connected directly" means that they are connected so that they rotate at the same speed.

In the preferred form of the invention, the mixing epicyclic gear train is a compound epicyclic with a positive basic ratio, enabling the first and second input gears to rotate in the same direction, and the Low Regime epicyclic gear train is simple with a negative basic ratio. The basic ratio of an epicyclic gear train is defined here as the velocity of the sun gear divided by the velocity of the annulus, with the planet carrier stationary.

Preferably, in the mixing epicyclic the sun gear is the first input, the annulus is the second input, and the planet carrier is the output which is connected to the High Regime clutch means and the system output, and in the Low Regime epicyclic the sun gear is the input gear, the annulus is the output, and the planet carrier is the braked element. The basic ratios of the Low Regime epicyclic and of the mixing epicyclic are in one example approximately −3.7 and 2.9 respectively.

The annuli of both epicyclic gear trains are conveniently integral.

In order that the invention may be better understood, a preferred embodiment of a transmission system will now be described with reference to the accompanying drawings, wherein:—

Figure 1 is a schematic diagram of a transmission system according to the preferred embodiment; and

Figure 2 is a view in cross-section of part of the transmission system of Figure 1, showing only a section above the centre axis of the transmission.

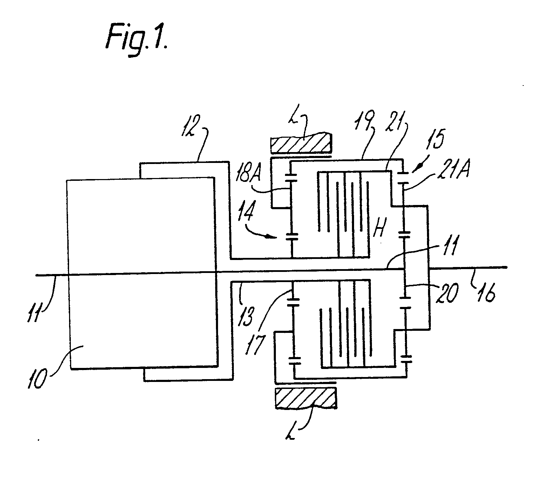

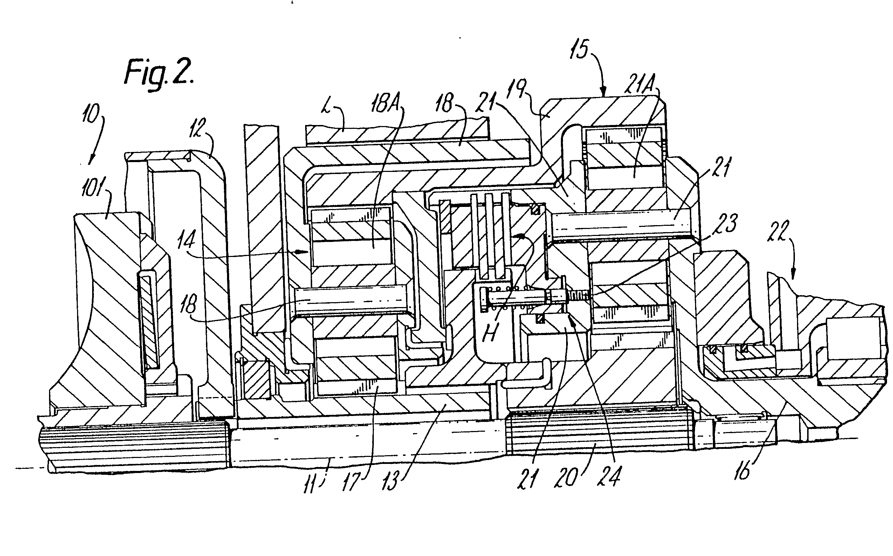

Referring firstly to Figure 1, a toroidal race-rolling traction type continuously variable ratio transmission unit 10, hereafter known as variator 10, has an input shaft 11 coinciding with (and therefore in 1:1 ratio with) the system input shaft 11. The input shaft 11 drives a toroidally-recessed disc at each end of the variator unit. The upper part of the right-hand one of these discs is shown as 101 in Figure 2. A pair of similar discs, facing respective ones of these driven discs, is connected to a variator output shaft 12 which extends at 13 coaxially with the system input shaft 11. As described more fully in the GB—A—documents mentioned above, sets of rollers are mounted between opposing faces of these discs to transmit drive from input to output with a gear ratio which is variable by tilting the rollers.

Depending on the Regime which is selected, drive from the variator output shaft 12, 13 reaches a mixing compound epicyclic gear train 15 by way of either a Low Regime simple epicyclic gear train 14 or a High Regime multiplate clutch H. The sun gear of the mixing epicyclic gear train 15 receives drive from the system input shaft 11. The summed output from the mixing epicyclic gear train 15 is taken from the planet carrier to the system output shaft 16.

For Low Regime, that is usually for a range of system output shaft speeds of between maximum reverse speed and slow forward speed, the clutch H is disengaged and a brake L is applied to anchor the planet carrier 18 of the Low Regme epicyclic gear train 14 to the system casing (not shown). Drive is then taken from the input shaft 11 through a sun gear 17 and planet pinions 18A to the annulus 19. The basic gear ratio of the Low Regime epicyclic gear train is in this example −3.665 (negative). The annulus 19 is integral with the annulus of the mixing epicyclic gear train 15, which sums drive from both input and output variator shafts and provides the system output to shaft 16, with a degree of power recirculation within the variator.

For High Regime, that is usually for a range of system output shaft speeds of slow forward to maximum forward, the clutch H is engaged and the Low Regime brake released. Drive is then taken directly from variator output shaft 13, via the planet carrier 21 of the mixing epicyclic gear train, to the system output shaft 16 in 1:1 ratio. The mixing epicyclic gear train 15 runs freely, and no torque is transmitted by the sun gear 20. There is no power recirculation. The basic gear ratio of the mixing compound epicyclic gear train is in this example 2.909 (positive).

The High Regime clutch H is an hydraulically operable multiplate clutch operated automatically by a computer-controlled hydraulic control system. The same computer is responsible for operating the Low Regime brake L and for controlling the variator in response to external conditions. In particular, the computer effects a change between Low and High regimes. The design of this system especially allows for a synchronous change between the two regimes, i.e. the gear trains are such that their rotational velocities undergo no appreciable change at the point of change from Low to High regime or vice versa.

In some applications also it will be desirable to operate in both regimes simultaneously, locking both the clutch H and the brake L.

Figure 2 shows in cross-section the upper half of part of the system of Figure 1, of which the parts having identical numbers have already been described. The hydraulic control fluid for the clutch H enters through a passage 22 adjacent the system output shaft 16, and is passed through the compound epicyclic gear train 15 by means of special axial channels 23 arranged between the two sets of planet pinions 21A, reaching an annular chamber 24 in which slides a piston for applying pressure to the clutch plates.

A system according to the invention may be incorporated in any power driveline; it is especially useful in a motor vehicle between the vehicle engine and the final drive.

## Claims

1. A two regime, continuously variable ratio transmission system having coaxial system input and system output shafts (11, 16), comprising: a continuously variable ratio transmission unit (variator 10) connected coaxially to the system input shaft and having a coaxial variator output shaft (12, 13); a mixing epicyclic gear train (15) having a first input gear connected directly to the system input shaft, a second input gear, and an output element connected directly to the system output shaft; a Low Regime epicyclic gear train (14) disposed between the variator and the mixing epicyclic gear train and having an input gear coupled to the variator output shaft, a braked element cooperating with a Low Regime brake, and an output gear connected to said second input gear, whereby drive may be transmitted in Low Regime from the variator output shaft to the mixing epicyclic gear train in a non-unity ratio; and High Regime clutch means, wherein change between high and low regime, or vice versa is synchronous, characterised in that said clutch means is arranged so as to couple directly the variator output shaft to the system output shaft when engaged.

2. A transmission system in accordance with Claim 1, wherein the mixing epicyclic gear train has a positive basic ratio, and wherein the Low Regime epicyclic gear train has a negative basic ratio.

3. A transmission system in accordance with Claim 2, wherein the mixing epicyclic gear train is a compound epicyclic gear train whose sun gear is the first input, whose annulus is the second input, and whose planet carrier is the output element, and the positive basic ratio enabling the first and second input gears to rotate in the same direction when the planet carrier is stationary.

4. A transmission system in accordance with Claim 1, 2 or 3, wherein the Low Regime epicyclic gear train is a simple epicyclic gear train whose sun gear is the input gear, whose annulus is the output gear, and whose planet carrier is the braked element, characterised in that the annuli of both epicyclic gear trains are integral.

5. A transmission system in accordance with any preceding claim, wherein the variator is of the toroidal race-rolling traction type.

6. A transmission system in accordance with any preceding claim, wherein the High Regime clutch means is an hydraulically operable multiplate clutch having a fluid supply taken through the Low Regime mixing epicyclic gear train.

7. A transmission system in accordance with any preceding claim, wherein the basic ratios of the Low Regime epicyclic gear train and of the mixing epicyclic gear train are in the ranges −3 to −4, and 2.5 to 3.5, respectively.

8. A transmission system in accordance with Claim 7, wherein the basic ratios of the Low Regime epicyclic gear train and of the mixing epicyclic gear train are substantially −3.7 and 2.9 respectively.

9. A motor vehicle whose drive train from engine to final drive incorporates a transmission system according to any preceding claim.

## Patentansprüche

1. In zwei Betriebsarten arbeitendes, stufenlos verstellbares Transmissionssystem mit koaxialen Systemeingang- und System-ausgangswellen (11, 16), mit: einer Transmissionseinheit (Variator 10) mit stufenlos veränderlichem Übersetzungsverhältnis, die koaxial mit der Systemeingangswelle verbunden ist und eine koaxiale Variatorausgangswelle (12, 13) aufweist, einem Planetenmischgetriebe (15) mit einem ersten, direkt mit der Systemeingangswelle verbundenen Eingangsglied, einem zweiten Eingangsglied und einem direkt mit der Systemausgangswelle verbundenen Ausgangsglied, einem Langsambetriebsart-Planetengetriebe (14), das zwischen dem Variator und dem Planetenmischgetriebe angeordnet ist und ein mit der Variatorausgangswelle gekuppeltes Eingangsglied, ein mit einer Langsambetriebsart-Bremse zusammenwirkendes gebremstes Element und ein mit dem genannten zweiten Eingangsglied verbundenes Ausgangsglied aufweist, derart, daß ein Antriebsmoment in der Langsam-

3

betriebsart von der Variatorausgangswelle mit einem von Eins verschiedenen Übersetzungsverhältnis auf das Planetenmischgetriebe übertragen wird, und Schnellbetriebsart-Kupplungsmittel, wobei der Übergang zwischen Schnell- und Langsambetriebsart oder umgekehrt synchron erfolgt, dadurch gekennzeichnet, daß die Kupplungsmittel so angeordnet sind, daß sie die Variatorausgangswelle im Eingriffsfall direkt mit der Systemausgangswelle kuppeln.

2. Transmissionssystem nach Anspruch 1, wobei das Planetenmischgetriebe ein positives Grundübersetzungsverhältnis hat, und wobei das Langsambetriebsart-Planetengetriebe ein negatives Grundübersetzungsverhältnis hat.

3. Transmissionssystem nach Anspruch 2, wobei das Planetenmischgetriebe ein Verbund-Planetengetriebe ist, dessen Sonnenrad das erste Eingangsglied bildet, dessen Ringrad das zweite Eingangsglied bildet, und dessen Planetenradträger das Ausgangsglied ist, wobei das positive Grundübersetzungsverhältnis das erste und das zweite Eingangsglied im gleichen Drehsinn umlaufen läßt, wenn der Planetenradträger feststeht.

4. Transmissionssystem nach Anspruch 1, 2 oder 3, wobei das Langsambetriebsart-Planetengetriebe ein einfaches Planetengetriebe ist, dessen Sonnenrad das Eingangsglied bildet, dessen Ringrad das Ausgangsglied bildet, und dessen Planetenradträger des gebremste Element ist, dadurch gekennzeichnet, daß die Ringräder beider Planetengetriebe integral sind.

5. Transmissionssystem nach einem der vorhergehenden Ansprüche, wobei der Variator der Toroid-Reibradbauart angehört.

6. Transmissionssystem nach einem der vorhergehenden Ansprüche, wobei die Schnellbetriebsart-Kupplungsmittel eine Hydraulisch betätigbar Mehrscheibenkupplung mit einer über das Langsambetriebsart-Planetenmischgetriebe entnommenen Flüssigkeitszufuhr ist.

7. Transmissionssystem nach einem der vorhergehenden Ansprüche, wobei die Grundübersetzungsverhältnisse des Langsambetriebsart-Planetengetriebes und des Planetenmischgetriebes in den Bereichen von −3 bis −4 bzw. von 2,5 bis 3,5 liegen.

8. Transmissionssystem nach Anspruch 7, wobei die Grundübersetzungsverhältnisse des Langsambetriebsart-Planetengetriebes und des Planetenmischgetriebs etwa −3,7 bzw. 2,9 betragen.

9. Motorfahrzeug, dessen Drehmomentübertragung vom Motor zum Endabtrieb ein Transmissionssystem nach einem der vorhergehenden Ansprüche enthält.

**Revendications**

1. Système de transmission à variation continue à deux régimes, comportant des arbres d'entrée (11) et de sortie (16) coaxiaux et comprenant: un groupe de transmission à variation continue (variation 10) relié coaxialement à l'arbre d'entrée du système et ayant un arbre coaxial de sortie (12, 13) du variateur; un train épicycloïdal mixeur (15) comportant un premier organe d'entrée relié directement à l'arbre d'entrée du système, un second organe d'entrée et un élément de sortie relié directement à l'arbre de sortie du système; un train épicycloïdal (14) de bas régime, disposé entre le variateur et le train épicycloïdal mixeur et comportant un organe d'entrée accouplé à l'arbre de sortie du variateur, un élément freiné coopérant avec un frein de bas régime et un organe de sortie relié au second organe d'entrée, si bien que l'effort d'entraînement peut être transmis, en bas régime, et avec un rapport différent de 1/1, de l'arbre de sortie du variateur au train épicycloïdal mixeur, et un embrayage de haut régime, (système) dans lequel le changement entre les régimes haut et bas ou inversement esv synchronisé, système caractérisé en ce que l'embrayage est agencé de façon à accoupler directement l'arbre de sortie du variateur à l'arbre de sortie du système, lorsqu'il est embrayé.

2. Système de transmission selon la revendication 1, dans lequel le train épicycloïdal mixeur a un rapport fondamental positif, et dans lequel le train épicycloïdal de bas régime a un rapport fondamental négatif.

3. Système de transmission selon la revendication 2, dans lequel le train épicycloïdal mixeur est un train composé dont le planétaire est le premier organe d'entrée, dont la couronne est le second organe d'entrée et dont le porte-satellites est l'élément de sortie, le rapport fondamental positif permettant à ces premier et second organes d'entrée de tourner dans le même sens lorsque le porte-satellites est immobile.

4. Système de transmission selon la revendication 1, 2 ou 3, dans lequel le train épicycloïdal de bas régime est un train épicycloïdal simple dont le planétaire est l'organe d'entrée, dont la couronne est l'organe de sortie et dont le porte-satellites est l'élément freiné, système caractérisé en ce que les couronnes des deux trains épicycloïdaux font corps.

5. Système de transmission selon l'une quelconque des revendications précédentes, dans lequel le variateur est du type à entraînement par galets roulant dans des pistes toroïdales.

6. Système de transmission selon l'une quelconque des revendications précédentes, dans lequel l'embrayage de haut régime est un embrayage à disques multiples pouvant être actionné par voie hydraulique et dont le circuit d'alimentation en fluide passe dans le train épicycloïdal mixeur de haute régime.

7. Système de transmission selon l'une quelconque des revendications précédentes, dans lequel les rapports fondamentaux du train épicycloïdal de bas régime et du train épicycloïdal mixeur sont compris dans les plages de −3 à −4 et 2,5 à 3,5, respectivement.

8. Système de transmission selon la revendication 7, dans lequel les rapports fondamentaux du train épicycloïdal de bas régime et du train épicycloïdal mixeur sont sensiblement égaux à −3,7 et 2,9, respectivement.

9. Véhicule à moteur dont la transmission du moteur à l'entraînement final incorpore un système de transmission selon l'une quelconque des revendications précédentes.

## Fig.1.

Fig.2.

EP 0 149 892 B1